Europäisches Patentamt

European Patent Office

Office européen des brevets

(11) Publication number: **0 143 763**
A1

# EUROPEAN PATENT APPLICATION

(21) Application number: 84850347.0

(51) Int. Cl.⁴: **B 41 J 7/36**

(22) Date of filing: 09.11.84

(30) Priority: 25.11.83 SE 8306523

(43) Date of publication of application: 05.06.85
Bulletin 85/23

(84) Designated Contracting States: DE FR GB IT NL SE

(71) Applicant: TELEFONAKTIEBOLAGET L M ERICSSON,
S-126 25 Stockholm (SE)

(72) Inventor: Nilsson, Ulf Peter, Ringvägen 15,
S-290 70 Svängsta (SE)

(74) Representative: Johnsson, Helge et al,
Telefonaktiebolaget L M Ericsson, S-126 25 Stockholm
(SE)

(54) Method of controlling a printer.

(57) A method in a printer of controlling printwheel and car-
riage movements, position and velocity signals (at 10 and 8)
corresponding to the printing wheel respective carriage
positions and instant velocities being such that the opera-
tions of the printwheel and carriage motors are controlled in
response to the velocity signal (at 8) until the printwheel or
carriage has reached an area in the vicinity of a desired
printing position. At the transition to this area, control in res-
ponse to the velocity signal is switched off and the operation
of the printwheel or carriage motor is controlled solely in
response to the position signal (at 10) until the desired posi-
tion has been reached.

# METHOD OF CONTROLLING A PRINTER

## TECHNICAL FIELD

The invention relates to control of printers, particularly control of the printwheel and carriage in printwheel printers, which are given commands from a keyboard or computer.

More specifically, the invention relates to a method of controlling a printer in accordance with the preamble to claim 1.

## BACKGROUND ART

A known printwheel printer, for printing characters in series on a recording medium, includes a carriage on which a printwheel is rotatably mounted, said wheel having a plurality of type characters. A drive motor is connected to the printwheel for rotating it to a desired angular position for the purpose of bringing a selected type element to rest in a printing position close to the recording medium. A hammer is arranged on the carriage and adapted to strike the selected type element when it is at rest in the printing position. A drive motor is connected to the carriage for moving it linearly along a predetermined path so that the printwheel and hammer are brought into the desired printing position along this path. Each of the drive motors is provided with a tranducer generating a position signal and a velocity signal. These signals are connected to a control circuit which in a first area controls the velocity of the drive motor in dependence on said velocity signal. In a second area, the home region to an end position, the drive motor is controlled in dependence on both the velocity signal and said position signal.

## DISCLOSURE OF INVENTION

The object of the invention is to provide a simple circuit for drivning the printwheel and carriage motors to a desired position as rapidly as possible. In other words, it is a question of determining the acceleration, velocity and retardation of the respective motor so that it is brought in the shortest possible

2 0143763

time from one stationary position to another stationary position, while avoiding self-oscillation phenomena when the motor stops in the new position.

This object has been achieved by the method in accordance with the invention having been given the characterizing features disclosed in claim 1.

BRIEF DESCRIPTION OF DRAWING

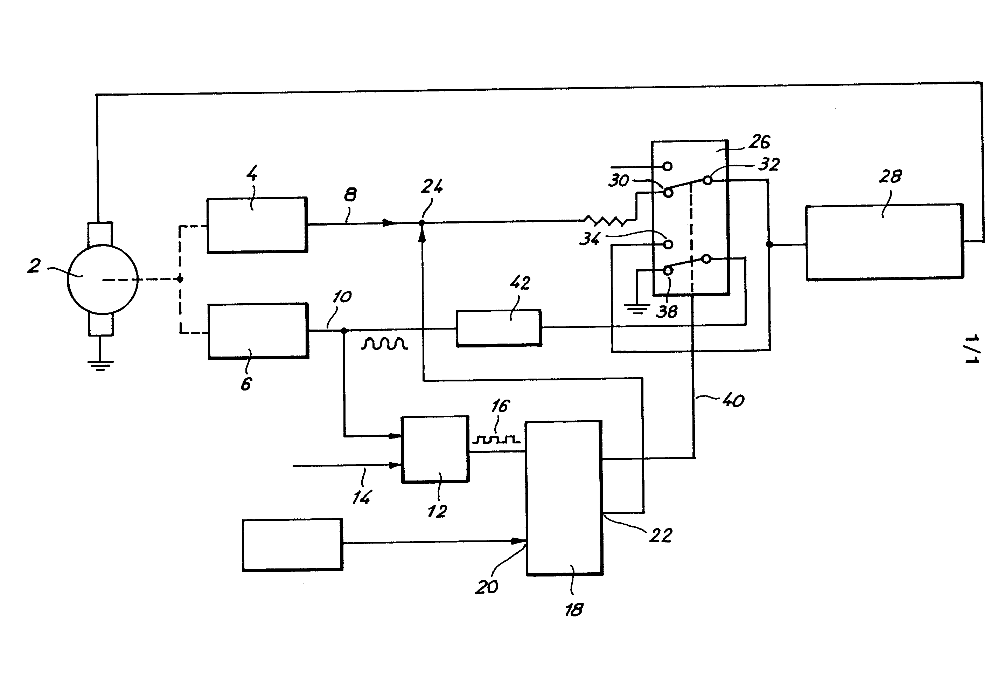

The single drawing illustrates a principle diagram of a control circuit with which the method in accordance with the invention can be put into effect.

BEST MODE FOR CARRYING OUT THE INVENTION

On the drawing, the numeral 2 denotes the drive motor for the printwheel and the carriage of a printwheel printer, respectively. The motor shaft drives two transducers, namely a velocity transducer 4 and a position transducer 6. The velocity transducer 4 is a tachogenerator, for example, which sends at 8 a signal representing the motor revolutionary rate. The position transducer 6 may be implemented as an optical perforated disc coacting with a suitable light source and light-sensitive means, such that the light-sensitive means sends at 10 a sinusoidal position signal representing the position of the printwheel and the carriage, respectively. More specifically, the number of periods of this signal will be proportional to the number of degrees through which the motor shaft has turned.

In a wave shape converter 12 the sinusoidal position signal is added to a direct voltage applied to 14, after which an, in depencende on said direct voltage, unsymmetrical square signal 16 is generated and supplied to a microprocessor 18, which in order to determine the positions counts the number of first flanks of the square-topped signal. The microprocessor receives commands from a keyboard or a computer and works out the due number of transfer positions and from them the maximum turning velocity which is to be attained; a so called criterion value signal. During the movement, the microprocessor continuously works out the remaining distance with the aid of the pulses in the pulse signal 16. The microprocessor contains a program for sending said criterion value signal at an output 22. This reference signals is an experimentally determined, descending stepped curve, which represents different criterion velocity values depending on the distance to a final position. The velocity is set with the aid of the criterion velocity signal by the latter being compared with the signal obtained at 24 from the velocity transducer 4. An error signal is formed at the point 24 and this signal is taken to a drive circuit 28 for the motor 2 via a solely schematically illustrated electronic switch 26. The error signal is given a polarity such that the error is decreased. The drive circuit 28 is implemented such that the motor acceleration or retardation will be proportional to the error.

The switch 26 is implemented as a double switch and includes an input 30 intended for the reception of the error signal from 24, and an output 32 connected to the motor drive circuit 28. An output 34 on the switch 26 is also connected to the input of the motor drive circuit 28.

The double switch 26 is controlled from the microprocessor 18, represented by the line 40.

In the illustrated state of the switch 26, the error signal formed at 24 is taken directly to the motor drive circuit 28. The position signal is earthed via a contact 38 on the switch 26. In this so-called velocity mode, the velocity of the motor 2 is controlled only by said error signal.

To obtain the final position, i.e. when the microprocessor has counted as many first flanks in the above mentioned square-topped signal 16 as the number of positions concerned in the transfer, the microprocessor controls the switch 26 so at the second flank of the last square-topped signal, that said error signal is disconnected from the driver 28, while instead the sinusoidal position signal via a filter 42 is connected to the driver 28. Due to the earlier mentioned unsymmetry of the square-topped signal 16 the second flank of the pulse occurs earlier than the zero passage of the sinusoidal position signal, said zero passage defining one position. The distance between the second flank of the last pulse and the zero passage of the position signal constitutes the already mentioned home region.

The filter 42 is of a so called lead-lag type. Its characteristics are such that, the output signal at low frequencies follows the input signal, while at higher frequencies a phase displacement of deriving character as well as an amplitude amplification occur. This results in that the output voltage of the filter effects the drive circuit 28 to slow down the motor speed in the home region, i.e. when the switch 26 connects the output of the filter to the driver 28. Said output voltage goes towards zero when the position signal goes towards zero and receives the opposite sign if the position signal possibly should pass zero.

CLAIMS

1    A method in typewriters of controlling the movements of a drive motor, where the drive motor is provided with a transducer for emitting a mainly sinusoidal position signal as well as a velocity signal and where the velocity of said motor is controlled by an error signal constituting the difference between said velocity signal and a criterion velocity signal generated in a computer, as a function of the acutal position, until its movement has reached a home region to a predetermined stop position, characterized in that in said home region said error signal is replaced by a drive signal derived from said position signal to attain said stop position.

2    Method as claimed in claim 1, characterized in that said stop position is placed approximately in a zero passage of the mainly sinusoidal position signal.

3    A method according to claim 1 and 2, characterized in that the signal derived from said position signal represents a signal in dependence on the change of the position signal being negatively phase displaced and amplitude amplified in comparison to the position signal.

4    A method according to claim 1, characterized in that said home region is shorter than a quarter of the distance between two positions.

1/1

0143763

European Patent
Office

EUROPEAN SEARCH REPORT

0143763
Application number

EP 84 85 0347.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 954 163 (GABOR) --- | 1-4 | B 41 J 7/36 |
| A | US-A-4 091 911 (CHANG et al) --- | 1-4 | |
| A | US-A-4 118 129 (GRUNDHERR) --- | 1-4 | |
| A | US-A-4 226 546 (HOFFMAN) ----- | 1-4 | |

TECHNICAL FIELDS
SEARCHED (Int. Cl.4)

B 41 J

G 06 K

The present search report has been drawn up for all claims

| Place of search | Date of completion of the search | Examiner |
|---|---|---|
| STOCKHOLM | 19-02-1985 | SVENSSON F. |